# FASCICULE DE BREVET EUROPEEN

(11) **EP 1 141 622 B1**
(45) Date de publication et mention de la délivrance du brevet: **15.10.2003**
(21) Numéro de dépôt: 99958272.9
(22) Date de dépôt: 08.12.1999
(51) Int. Cl.: F21V 8/00

(54) **GENERATEUR DE LUMIERE SUBMERSIBLE POUR FIBRES OPTIQUES EN VERRE OU EN PLASTIQUE**
UNTERWASSER LICHTQUELLE FÜR GLASS ODER PLASTISCH OPTISCHE FASERN
SUBMERSIBLE LIGHT GENERATOR FOR GLASS OR PLASTIC OPTICAL FIBRES

(30) Priorité: 08.12.1998 FR 9815635
(43) Date de publication de la demande: 10.10.2001
(73) Titulaire: Optectron Industries, 91942 Les Ulis Cedex (FR)
(72) Inventeur: CHENET, Pierre, F-92160 Antony (FR); GERBEAUX, Jean-Michel, F-91470 Forges-Les-Bains (FR)
(74) Mandataire: Gaucherand, Michel
(86) Numéro de dépôt international: FR9903056
(87) Numéro de publication internationale: WO00034711

(56) Documents cités:
- FR-A- 2 730 038
- FR-A- 2 757 929
- US-A- 5 278 596
- US-A- 5 295 052

## Description

L'invention concerne un générateur de lumière submersible possédant une étanchéité à indice de protection (IP) 68, pour fibres optiques en verre ou en plastique.

L'étanchéité à indice de protection 68 est définie dans la norme EN 60 598 1. En résumé, on entend par générateur de lumière submersible ayant une étanchéité à indice de protection 68, le fait que le générateur de lumière puisse être plongé et fonctionner correctement à une profondeur d'eau de 20 mètres, voire dans certains cas à des profondeurs supérieures. Une étanchéité à indice de protection 68 implique l'impossibilité, pour les poussières et les fluides, de rentrer dans l'appareil ou les parties d'un appareil vérifiant une telle étanchéité.

L'éclairage au moyen de fibres optiques, en verre ou en plastique, le plus souvent au moyen des fibres optiques en plastique, tel que le polyméthacrylate de méthyle, se généralise de plus en plus.

Dans les applications les plus importantes, qui se situent dans les domaines de la signalisation, du balisage des voies, des rails et des parkings, de l'éclairage industriel et routier, de l'éclairage de sécurité et de l'éclairage de façade, on recherche actuellement à améliorer les générateurs de lumière pour fibres optiques, afin d'atteindre les résultats suivants :
- la possibilité de poser les générateurs de lumière dans des milieux inondables ou sous l'eau ;
- l'utilisation de générateurs de lumière à forte dissipation thermique interne permettant de réduire la température à l'entrée des câbles ou faisceaux de fibres optiques. En effet, les fibres optiques, quand elles sont en plastique, généralement en polyméthacrylate de méthyle, ne peuvent supporter des températures élevées, supérieures à 80°C, en régime continu ;
- la mise en oeuvre de générateurs de lumière dont le niveau de bruit, principalement dû aux systèmes de ventilation, est réduit au maximum.

Des générateurs de lumière destinés à l'éclairage par fibres optiques sont maintenant commercialisés, mais aucun ne présente, dans l'état de l'art actuel, l'ensemble des propriétés énumérées plus haut et notamment l'étanchéité définie par un indice de protection 68 sous une hauteur de 20 mètres d'eau.

Les générateurs actuels sont constitués généralement par une lampe halogène, à iodures métalliques ou xénon, associée à un réflecteur qui renvoie la lumière après passage dans une optique de focalisation appropriée, dans la direction où est placé le faisceau ou le câble à fibres optiques chargés de transmettre la lumière en un ou plusieurs points aux endroits souhaités. Un des inconvénients majeurs de ces générateurs est que le meilleur compromis entre la puissance lumineuse transmise par le câble et l'élévation de température à l'entrée du câble est difficile à obtenir. Il peut en résulter des détériorations des fibres optiques plastiques, en raison des températures auxquelles elles peuvent être soumises, qui peuvent dépasser 80°C. C'est pourquoi ces générateurs sont nécessairement équipés de filtres anticaloriques qui absorbent, en même temps que le rayonnement infrarouge, une partie significative de la lumière visible.

Pour éviter le risque de vieillissement des fibres plastiques, un filtre UV (ultraviolet) est parfois nécessaire.

Par ailleurs, un ou plusieurs ventilateurs sont nécessaires pour évacuer la chaleur engendrée à l'intérieur de ces générateurs. La présence de ces ventilateurs engendre différents problèmes : premièrement une nuisance sonore, souvent indésirable dans certaines applications en raison des ouvertures et auvents d'aération prévus sur certaines faces des générateurs, et d'autre part l'impossibilité d'utiliser ces générateurs en milieux très humides par suite de ruissellements ou d'inondation. De plus, ces ouvertures et auvents laissent souvent passer une partie de la lumière parasite émise par la lampe, créant ainsi une lumière parasite non désirée.

La présente invention a pour objet un générateur de lumière pour fibres optiques, en verre ou en plastique, qui puisse fonctionner aussi bien dans l'air que sous l'eau, et qui soit submersible jusqu'à une profondeur de 20 mètres d'eau, voire plus dans certains cas.
La présente invention a également pour objet un générateur de lumière pour fibres optiques, en verre ou en plastique qui permette d'avoir une température à l'entrée des câbles ou faisceaux de fibres optiques suffisamment basse pour empêcher toute dégradation par fusion des fibres optiques, en particulier lorsqu'elles sont en plastique.

L'invention a ainsi pour objet un générateur de lumière submersible présentant une étanchéité à indice de protection 68, pour fibres optiques en verre ou en plastique, caractérisé en ce que :
a) le générateur comprend plusieurs modules étanches, ces modules étant séparés et isolés thermiquement les uns des autres, mais étant reliés entre eux de façon étanche,
b) les modules essentiels du générateur de lumière sont :
   - au moins un module étanche, dit de lampe, comprenant au moins une lampe envoyant au moins un faisceau lumineux sur au moins une optique de focalisation, le module de lampe étant connecté de façon étanche à une alimentation en énergie électrique,
   - au moins un module étanche, dit de transfert, recevant le faisceau lumineux sortant du module de lampe, l'une des faces latérales du module de transfert étant à proximité de l'une des faces latérales du module de lampe, le passage du faisceau lumineux se faisant au travers de deux fenêtres étanches, en matériau optiquement transparent, prévues en vis-à-vis respectivement dans lesdites faces latérales des modules de lampe et de transfert, le module de transfert portant sur une autre de ces faces un connecteur pour un ensemble de fibres optiques conductrices de la lumière produite par le générateur, sous la forme d'un faisceau de fibres optiques ou d'un câble optique ;
c)entre les faces latérales des modules de lampe et de transfert se faisant face, en dehors de la zone prévue pour le passage du faisceau lumineux qui est délimité par les deux fenêtres étanches, sont prévus des moyens pour assurer l'étanchéité IP 68 des modules de lampe et de transfert avec l'environnement extérieur qui prennent en compte la dilatation thermique et le retrait thermique des matériaux, et des moyens pour réaliser une isolation thermique entre ces modules.
   A cette fin, on prévoit de préférence successivement un premier joint d'étanchéité, un isolant thermique et un second joint d'étanchéité qui remplissent les fonctions précitées recherchées ;
d)les autres faces des modules de lampe et de transfert sont prévues dans un matériau bon conducteur de la chaleur et, lorsqu'elles font partie de l'enveloppe externe du générateur de lumière, ces autres faces sont conformées, de sorte à avoir une surface externe d'échange thermique en contact avec l'environnement extérieur la plus grande possible, et une surface interne en contact avec l'atmosphère interne des modules permettant un transfert thermique optimum vers la surface externe.

Dans le cadre de la présente invention, le terme "étanche" sera utilisé pour définir des éléments possédant une étanchéité à indice de protection IP 68.

De préférence, la séparation étanche et thermiquement isolante prévue entre les modules de lampe et de transfert, qui comprend un passage étanche et optiquement transparent pour le faisceau lumineux est constituée :
- d'une plaque en matériau poreux, minéral ou organique, dont on a colmaté la porosité par imprégnation sous vide d'une colle, par exemple des colles à base de résines époxydiques comme celles commercialisées sous la dénomination Araldite.
   L'épaisseur de la plaque est variable et fonction du coefficient de conductibilité thermique du matériau poreux. L'épaisseur de la plaque est avantageusement au moins égale à 5 mm et varie de préférence de 5 mm à 20 mm.
   De bons résultats ont été obtenus avec une plaque réalisée dans un matériau composite commercialisé sous la dénomination PAMITHERM :
   qui est composé de feuilles de mica à forte granulométrie, imprégnées d'une résine de silicone à propriétés thermiques élevées : conductibilité thermique, selon la norme DIN 52612 égale à 2.10⁻³ Watt / cm.°K ; coefficient moyen de dilatation linéique, selon la norme USM 77110 égale à 9.10⁻⁶°K⁻¹ bonne tenue au feu, classement MOFO, selon la norme NF 16.101,
   dont on a colmaté la porosité à l'aide d'une résine époxydique ayant une stabilité thermique supérieure à 200°C, selon la norme ISO 75.
- et de deux joints d'étanchéité prévus de part et d'autre de la plaque qui sont comprimés contre la plaque lors de l'assemblage et du serrage mécanique des modules de lampe et de transfert l'un contre l'autre.

Chaque joint d'étanchéité peut être plat ou torique. Avantageusement, chaque joint est à base de silicone, en raison de sa bonne tenue à l'humidité, aux températures élevées et aux agents chimiques, et en raison de son élasticité et de son caractère imputrescible.

Pour le passage du faisceau lumineux, ainsi que celui des moyens d'assemblage et des connexions électriques des modules du générateur, les joints d'étanchéité, lorsqu'ils sont plats, comprennent des ouvertures de dimensions correspondant, d'une part, à celle des fenêtres étanches, optiquement transparentes, et d'autre part, correspondant aux connecteurs de traversée étanche pour les moyens d'assemblage et les connexions électriques.

Selon une caractéristique de l'invention, les faces des modules de transfert et de lampe n'étant pas en vis-à-vis, sont faites dans un matériau qui est bon conducteur thermique, de préférence en aluminium ou en alliage non ferreux approprié.

En outre, les faces des modules de lampe et de transfert qui font partie de l'enveloppe externe du générateur de lumière sont conformées, de sorte à avoir une surface externe en contact avec l'environnement extérieur et une surface interne en contact avec l'atmosphère intérieure aux modules qui soient les plus grandes possible,'afin de favoriser la dissipation de la chaleur générée dans le générateur de lumière en fonctionnement. Ainsi, le refroidissement des modules constituant le générateur, en particulier du module de lampe, est nettement amélioré lorsque ces faces faisant partie de l'enveloppe externe du générateur de lumière ont une surface interne et une surface externe constituées d'ailettes formant radiateur d'échange thermique. Afin de favoriser le captage et l'évacuation de la chaleur, il est préférable d'augmenter les surfaces externe et interne des faces des modules au niveau desquelles s'effectuent les échanges thermiques, en augmentant le nombre d'ailettes et/ou en augmentant la largeur des ailettes et/ou la forme des ailettes. De préférence, les surfaces développées externes sont supérieures aux surfaces développées internes.

Selon une première variante de réalisation de l'invention, le module de transfert peut comprendre un ventilateur et/ou un dispositif d'échange thermique à effet Peltier.

Avantageusement, le ventilateur est placé sur le passage du faisceau lumineux traversant le module de transfert. Le ventilateur favorise une circulation d'air, à l'intérieur du module de transfert, dans un circuit en chicane, autour de la surface intérieure des ailettes.

A la place du ventilateur, ou en combinaison avec le ventilateur, on peut prévoir un dispositif d'échange thermique à effet Peltier, dont le principe général est l'inverse de celui d'une pompe à chaleur, ce dispositif étant placé entre une source froide, à l'extérieur du générateur de lumière, et un point chaud à l'intérieur du module de transfert.

Le passage du dispositif d'échange thermique à effet Peltier au travers du module de transfert se fait au travers d'un joint d'étanchéité permettant d'atteindre une étanchéité IP 68.

Selon une seconde variante de réalisation de l'invention, l'alimentation en énergie électrique de la lampe peut être intégrée ou non dans le générateur de lumière. Dans le cas où un module d'alimentation étanche IP 68 est intégré au générateur de lumière et dès lors disposé à proximité des autres modules du générateur, on prévoit des moyens pour limiter les échanges thermiques entre ce module d'alimentation et les autres modules.
Dans le cas où le module d'alimentation n'est pas intégré dans le générateur de lumière, une liaison électrique étanche doit être prévue entre ce module d'alimentation et le générateur.

Le module, dit d'alimentation, quand il est intégré au générateur de lumière selon l'invention, peut être prévu dans un module séparé à proximité du module de lampe, mais sans contact avec ce dernier. En outre, le module d'alimentation peut être à proximité du module de transfert.

Avantageusement, les deux faces des modules de lampe et d'alimentation se faisant face, sont faites dans un matériau bon conducteur de la chaleur, qui est de préférence le même que celui utilisé pour fabriquer les faces externes du générateur de lumière.
Compte tenu de ce qui précède, un espace libre existe entre les deux faces voisines des modules de lampe et d'alimentation. Avantageusement, cet espace libre est mis en contact avec l'extérieur pour permettre une évacuation d'une partie de la chaleur produite dans ces deux modules. Un fluide froid (eau ou air), provenant de l'environnement extérieur, peut alors circuler entre ces deux modules.

Ainsi, on améliore l'évacuation thermique, grâce à la disposition en deux étages séparés, des modules de lampe et d'alimentation.
Avec cette disposition, le module d'alimentation n'est pas échauffé par le flux d'air issu du module de lampe, et inversement, le flux d'air circulant le long du module d'alimentation n'ajoute pas d'échauffement dans l'axe du faisceau lumineux.

Selon d'autres caractéristiques avantageuses de l'invention, le générateur de lumière selon l'invention peut comprendre :
- un dispositif de changement de couleur de la lumière, intégré dans le générateur de lumière, avantageusement placé dans le (ou les) modules de transfert.
   Un tel dispositif comprend essentiellement un moteur électrique permettant de mettre en rotation un disque transparent, comportant un graphisme ou une couleur, le disque étant prévu sur le passage du faisceau lumineux, la vitesse de défilement de ce disque étant modulable par programmation.
- au moins un filtre anticalorique placé dans le flux du faisceau lumineux, pour filtrer les infrarouges et les ultraviolets à des longueurs d'onde déterminées.
   L'utilisation d'un tel filtre est généralement nécessaire lorsque les fibres optiques sont en matière plastique.
   Avantageusement, l'une des fenêtres transparentes et étanches, laissant passer le faisceau lumineux entre le module de lampe et le module de transfert, est constituée par un filtre anticalorique.
- un barreau optique mélangeur, en matériau optiquement transparent.

On décrira maintenant plus en détail deux formes de réalisation particulière de l'invention qui en fera mieux comprendre les caractéristiques essentielles et les avantages, étant entendu toutefois que ces deux formes de réalisation sont choisies à titre d'exemple et qu'elles ne sont nullement limitatives.

Leur description est illustrée par les dessins annexés, dans lesquels :
- la figure 1 représente schématiquement une vue en coupe horizontale d'un générateur de lumière comprenant deux sorties pour faisceaux étanches de fibres optiques ou câbles optiques étanches ;
- la figure 2 représente une vue en coupe selon le plan AA mentionné sur la figure 1 ;
- la figure 3 représente une vue en coupe selon le plan CC mentionné sur la figure 2 ;
- la figure 4 représente schématiquement une vue en coupe horizontale d'un générateur de lumière comprenant une sortie unique à connecter à un faisceau étanche de fibres optiques ou un câble étanche optique ;
- la figure 5 représente une vue en coupe selon le plan AA mentionné sur la figure 4 ;
- la figure 6 représente une vue en coupe selon le plan CC mentionné sur la figure 5 ;
- la figure 7 représente schématiquement une vue partielle, en coupe horizontale, d'un générateur de lumière comprenant deux modules de lampe séparés et une sortie unique à connecter à un faisceau étanche de fibres optiques ou un câble optique étanche ;
- les figures 8a et 8b représentent schématiquement un mode de connexion du faisceau de fibres optiques ou câble optique sur un générateur conforme à l'invention ;
- les figures 9a et 9b représentent schématiquement le dispositif extractible dans lequel est logée la lampe.

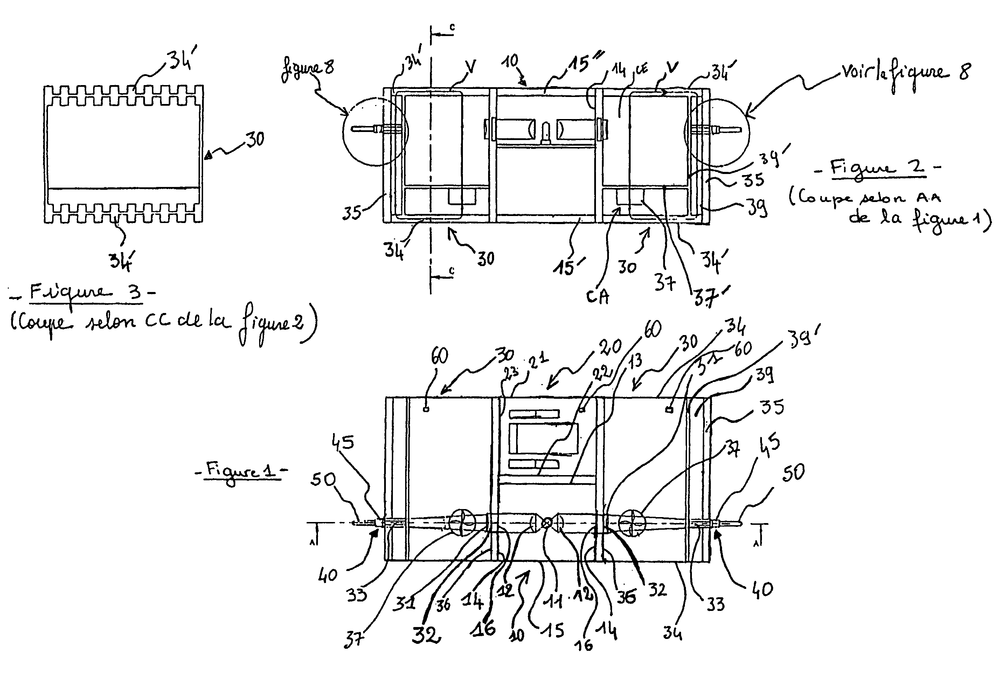

Sur la figure 1 est représentée une vue schématique, en coupe horizontale, d'un générateur de lumière à deux sorties pour des faisceaux étanches de fibres optiques ou câbles optiques étanches. Un tel générateur fait l'objet de la revendication 13.
Ce générateur de lumière comprend quatre modules étanches, séparés et isolés thermiquement les uns des autres, qui sont reliés entre eux de façon étanche. Ces quatre modules sont :
- un module de lampe (10),
- un module d'alimentation en énergie électrique (20), à proximité du module de lampe (10), mais sans contact direct avec le module de lampe (10),
- deux modules de transfert (30), disposés de part et d'autre des modules de lampe (10) et d'alimentation (20).

Le module de lampe (10) comprend une lampe (11) sans réflecteur. Par exemple, il peut s'agir d'une lampe de 20 à 300 W, telle qu'une lampe à iodure métallique, ou une lampe halogène ou bien encore une lampe xénon.

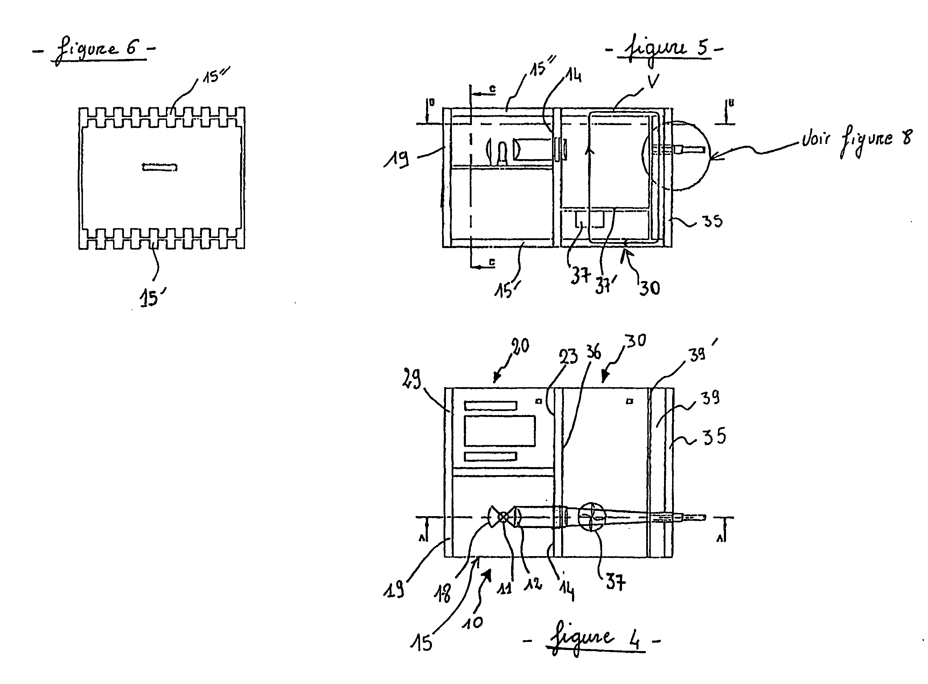

Selon le mode de réalisation représenté à la figure 1, la lampe (11) est sans réflecteur. Elle peut ainsi envoyer deux faisceaux lumineux, par l'intermédiaire notamment des optiques de focalisation (12, 31), des fenêtres étanches (16, 32), en matériau optiquement transparent, et si nécessaire, des barreaux-mélangeurs (33) réalisés en matériau optiquement transparent, vers deux sorties (40) du générateur de lumière qui sont opposées, symétriques et situées sur le même axe. La lumière émise par la lampe est donc ici transmise d'une manière quasi monodirectionnelle, dans deux sens opposés. Les optiques de focalisation (12, 31) permettent de concentrer une partie de la lumière émise dans deux sens opposés, chaque faisceau lumineux focalisé étant envoyé à une sortie (40), à un connecteur étanche (45) de faisceau (50) de fibres optiques ou un câble optique (50), par l'intermédiaire d'un barreau-mélangeur (33) réalisé dans un matériau optique transparent. Dans le cas d'un générateur de lumière à lampe sans réflecteur, la présence des barreaux-mélangeurs n'est pas obligatoire. En revanche, dans le cas d'un générateur de lumière à lampe à réflecteur (voir la description des figures 4, 5 et 6 ci-après), quand le réflecteur est parabolique ou elliptique, il est recommandé de prévoir un barreau-mélangeur pour recevoir le faisceau lumineux en sortie du module de transfert, avant la connexion étanche prévue avec l'ensemble de fibres optiques.
Le barreau-mélangeur, qui est généralement en verre optiquement quasiment pur, permet la focalisation optimale du faisceau lumineux sans problèmes thermiques, le mélange avec modulation des rayonnements lumineux, afin de rendre la lumière émise plus cohérente, d'éviter les phénomènes de scintillement et papillotements ("Flickering" en anglais), et de faire la focalisation du barreau à l'intérieur du barreau.

Le barreau-mélangeur joue également un rôle d'adaptateur d'indice optique.

L'absence de réflecteur associé à la lampe est avantageux dans le cas des lampes où le réflecteur est un élément séparé de la lampe, comme les lampes à iodures métalliques. En effet, avec de telles lampes, il est nécessaire de choisir les dimensions du réflecteur et sa position dans le générateur de lumière, en fonction du type de lampe utilisé. De ce fait, l'efficacité du réflecteur est souvent très faible.

Ainsi, par exemple, en associant un réflecteur à une lampe de General Electric de caractéristiques MBI 150/T/40, et en utilisant de bonnes conditions de réglage du couple lampe-réflecteur, on n'augmente que d'environ 20 % l'intensité du flux lumineux émis par la lampe seule.

Le module de lampe (10) qui comprend une lampe (11) et une optique de focalisation (12) est délimité par un boîtier comprenant :
- une face (13) en vis-à-vis avec le module d'alimentation (20),
- deux faces (14) chacune en vis-à-vis avec l'un des deux modules de transfert (30),
- trois faces (15, 15' et 15''), en contact avec l'environnement extérieur, et qui constituent des parties des faces externes apparentes du générateur de lumière.

Conformément à l'invention, la face (13) est réalisée dans un matériau bon conducteur de la chaleur et étanche, de préférence en aluminium.

De même, les faces (15, 15' et 15'') sont réalisées dans un matériau bon conducteur de la chaleur et étanche, de préférence en aluminium. En outre, les faces (15, 15' et 15'') sont conformées de sorte à avoir des surfaces externe, en contact avec l'environnement extérieur, et interne, en contact avec l'atmosphère intérieure au module, les plus grandes possible, les surfaces développées externes ayant une superficie supérieure à celles développées intérieures.

Avantageusement, les surfaces externe et interne des faces (15, , 15' et 15'') sont constituées d'ailettes formant radiateur d'échange thermique, en nombre et dimension suffisants pour permettre l'évacuation de la chaleur produite par la lampe.

Les modules de transfert (30) et de lampe (10) sont séparés par une plaque en matériau minéral poreux,. dont on a colmaté la porosité par imprégnation sous vide à l'aide d'une colle à base de résines époxydiques. Avantageusement, on utilise le matériau composite connu sous le nom commercial PAMITHERM décrit plus haut.

Sur la figure 1, chaque plaque est matérialisée par ses faces latérales, à savoir les faces (14) et (23) respectivement des modules de lampe et d'alimentation, et la face (36) du module de transfert.
En outre, l'étanchéité au niveau de cette plaque entre les modules d'alimentation et de lampe et chaque module de transfert est réalisée au moyen de deux joints d'étanchéité prévus de part et d'autre de la plaque, ces deux joints étant comprimés contre la plaque lors de l'assemblage et du serrage mécanique des modules.

En l'occurrence, chaque joint d'étanchéité a la forme d'une feuille étanche qui est rapportée sur les faces latérales de la plaque, et comprend les ouvertures nécessaires pour le passage du faisceau lumineux et des moyens de fixation (du type tirants) des modules entre eux. De préférence, le joint d'étanchéité est une feuille en silicone.

Le module d'alimentation en énergie électrique (20), comprend une platine-support d'alimentation en énergie électrique, cette alimentation pouvant être de type ferromagnétique ou de type électronique, le module d'alimentation en énergie électrique est de préférence combiné avec un système de sécurité en cas de surchauffe. Ce module étanche est délimité par un boîtier comprenant :
- trois faces (21) en contact avec l'environnement extérieur, et qui constituent des parties de l'enveloppe externe du générateur de lumière,
- une face (22) en vis-à-vis avec la face (13) du module de lampe, sans être en contact,
- deux faces (23), chacune en vis-à-vis avec l'un des modules de transfert (30).

Conformément à l'invention, la face (22) est réalisée dans un matériau bon conducteur de la chaleur et étanche, de préférence en aluminium. L'espace libre ménagé entre les faces (13) et (22), respectivement des modules de lampe et d'alimentation, est avantageusement en contact avec l'extérieur qui est, selon le cas, de l'air et de l'eau. Ainsi, on autorise une évacuation d'une partie de la chaleur produite dans ces deux modules.

De même, les faces (21) sont réalisées dans un matériau bon conducteur de la chaleur et étanche, de préférence en aluminium. En outre, les faces (21) sont conformées de sorte à avoir une surface extérieure et intérieure la plus grande possible. Avantageusement, les faces (21) ont une surface interne et une surface externe formant radiateur d'échange thermique, en nombre et dimension suffisants, pour permettre l'évacuation de la chaleur présente dans le module d'alimentation.

Comme indiqué plus haut, chaque face (23) correspond à une face d'une plaque en matériau poreux minéral, dont on a colmaté la porosité et sur laquelle on a rapporté un joint d'étanchéité, sous la forme d'une feuille étanche en silicone. Sur la figure 1, la séparation étanche et thermiquement isolante entre, d'une part les modules de lampe et d'alimentation, et d'autre part chaque module de transfert, est réalisée au moyen d'une plaque unique, telle que définie plus haut et étanchéifiée comme précité.

Chaque module de transfert (30), qui comprend, chacun, essentiellement, une optique de focalisation (31) du faisceau lumineux, un barreau-mélangeur (33) en matériau optiquement transparent et un connecteur (45) de faisceau (50) de fibres optiques ou un câble optique (50), sont également délimités, chacun, par un boîtier étanche comprenant :
- cinq faces (34, 34', 35), en contact avec l'environnement extérieur du générateur, et qui constituent des parties de l'enveloppe externe du générateur de lumière,
- une face (36) en vis-à-vis avec la face (14) du module de lampe et la face (23) du module d'alimentation.

Conformément à l'invention, et comme indiqué plus haut, chaque face (36) correspond à une face d'une plaque en matériau poreux minéral, dont on a colmaté la porosité et sur laquelle on a rapporté un joint d'étanchéité en forme de feuille étanche en silicone.

Comme les faces (21) du module d'alimentation et les faces (15, 15', 15'') du module de lampe, les faces (34, 34', 35) des modules de transfert sont réalisées dans un matériau bon conducteur de la chaleur et étanche, de préférence en aluminium, et sont conformées de sorte à avoir une surface externe et une surface interne la plus grande possible. Pour ce faire, les surfaces externe et interne sont constituées d'ailettes formant radiateur d'échange thermique. Un exemple de face (34') à ailettes est donné sur la figure 3 correspondant à la coupe selon l'axe CC de la figure 2. Il s'agit de l'une des faces du module de transfert en contact avec l'environnement extérieur. On obtient une figure de boîtier, une figure semblable à la figure 3, pour une coupe des faces de boîtier (15, 15', 15'') si on déplace l'axe de coupe CC dans les modules d'alimentation et de lampe, ou pour les faces (35) si on effectue une coupe selon un axe perpendiculaire à l'axe CC.

Dans le générateur décrit en figures 1, 2 et 3, l'alimentation en énergie électrique de la lampe est réalisée au moyen d'un câble électrique haute tension étanche qui traverse successivement les faces (ou parois) des modules d'alimentation, de transfert puis de celui de lampe, jusqu'au culot de la lampe. Chaque traversée de face (paroi) d'un module se fait au travers d'un joint étanche.

Afin de ne pas compliquer les figures 1, 2 et 3, le câble électrique étanche n'a pas été représenté.

Comme indiqué plus haut, pour le passage de chaque faisceau lumineux, une fenêtre (16) étanche, en matériau optiquement transparent, est ménagée dans chaque face (14) du module de lampe, ainsi qu'une fenêtre (32) étanche, en matériau optiquement transparent, dans chaque face (36) des modules de transfert.

Au niveau de l'une de ces fenêtres, un filtre anticalorique peut être prévu, afin de filtrer les infrarouges et les ultraviolets à des longueurs d'onde appropriées.

Il peut être avantageux de placer un filtre anticalorique entre deux lentilles de focalisation (12, 31). En effet, dans ce cas, les lentilles (12, 31) peuvent être traitées, sur toutes leurs faces ou seulement sur leurs faces recevant le flux lumineux, avec dépôt d'une pellicule antireflets, pour améliorer la transmission du flux lumineux.

La structure en modules séparés, étanches et isolés thermiquement entre eux, chaque module étant équipé de moyens permettant d'évacuer la chaleur interne au module, en particulier au moyen de surfaces constituées d'ailettes formant radiateur d'échange thermique, permet d'avoir une température acceptable au niveau de la connexion avec les fibres optiques.

De façon à diminuer encore la température au niveau de la connexion avec les fibres optiques, en particulier dans le cas de fibres optiques en plastique et de l'utilisation d'une lampe puissante, une ventilation forcée est assurée par un ventilateur (37) dans chaque module de transfert (30). Chaque ventilateur (37) produit une circulation d'air forcé dans un circuit en chicane autour des ailettes, à l'intérieur de chaque module de transfert, et ceci permet un brassage important de la chaleur à l'intérieur des modules de transfert, ce qui favorise le transfert thermique vers l'extérieur du générateur.

Le bruit de ce ventilateur est considérablement réduit par l'emploi d'un système de ventilation, constitué par un circuit d'aspiration et d'évacuation d'air, réalisé par des conduits disposés en chicane. Comme on peut le voir sur la figure 2, la circulation d'air forcé, matérialisée par la référence "V", est réalisée autour des ailettes des faces (34') et dans un conduit (39) communiquant avec le courant d'air forcé autour des ailettes. Le conduit (39) est délimité par une plaque métallique (39'). Les circuits d'aspiration et d'évacuation de l'air entraîné par le ventilateur (37) sont réalisés respectivement dans la chambre d'aspiration (CA) et la chambre d'évacuation (CE), ces deux chambres étant séparées par la plaque-support (37') du ventilateur (37), fixée dans chaque module de transfert (30). Cet aménagement mécanique particulier est destiné à modifier le trajet normal de la circulation d'air du système de ventilation, au profit des surfaces les plus chaudes ou les plus sensibles, comme celles des extrémités des câbles optiques. Le refroidissement pourra être amélioré, si besoin est, avec un dispositif d'échange thermique à effet Peltier (60) placé dans chaque module du générateur, sur les faces en contact avec l'environnement extérieur, et/ou sur chaque barreau-mélangeur (33).

Selon l'invention, une amélioration sensible est obtenue pour ces conduits en chicane à la fois du point de vue du bruit acoustique et de la dissipation thermique.

Avec les générateurs classiques actuels, même en utilisant des ventilateurs et des filtres anticaloriques, la température à l'entrée des câbles optiques peut atteindre 60°C. Cette température est réduite à 50°C dans le cadre de la présente invention, grâce à la structure en modules séparés et isolés thermiquement, et aussi grâce à la dissipation de chaleur qui s'effectue par les surfaces des modules en contact avec l'environnement extérieur, en particulier quand ces faces ont une surface interne et une surface externe ayant la forme d'ailettes du type radiateur, une telle structure en chicane pour le refroidissement des modules étant particulièrement efficace. La température à l'entrée des câbles à FOP peut être maintenue au-dessous de 50°C avec le dispositif d'échange thermique à effet Peltier.

Le niveau du bruit acoustique des nouveaux générateurs, objets de l'invention, est toujours inférieur à 44 dba (dba : unité de mesure d'un niveau de pression acoustique mesuré dans des conditions normalisées) et ne peut être que de 25 dba. Cette valeur est réduite d'au minimum 10 à 20 dba par rapport à celle mesurée sur les générateurs commercialisés connus non étanches.

Sur la figure 4, est représentée une vue schématique, en coupe horizontale d'un générateur de lumière comprenant une sortie unique à connecter à un faisceau étanche de fibres optiques ou un câble étanche optique. Un tel générateur fait l'objet de la revendication 14.

Les différences importantes avec le générateur de lumière présenté sur les figures 1, 2 et 3 résident dans :
- la présence d'un réflecteur (18) dans le module étanche de lampe (10), qui comprend par ailleurs une lampe (11) et une optique de focalisation (12) ; dès lors, un faisceau lumineux unique est transmis par la lampe (11),
- la présence d'un module étanche unique de transfert (30), situé à côté des modules étanches de lampe (10) et d'alimentation (20).

En conséquence :
- une seule séparation étanche et thermiquement isolante est prévue entre les modules de lampe, d'alimentation et de transfert. Cette séparation est ici limitée par les faces (14), (23) et (36). Cette séparation est réalisée dans un matériau étanche et isolant thermiquement, de préférence un matériau minéral poreux, dont on a colmaté la porosité par imprégnation sous vide d'une colle à base de résines époxydiques. En outre, l'étanchéité de cette séparation est renforcée en rapportant sur les faces (14, 23 et 36) une feuille étanche telle qu'une feuille en silicone ;
- une plaque unique en un matériau étanche et bon conducteur de la chaleur, de préférence en aluminium, constitue les faces (19) et (29), respectivement des modules de lampe (10) et d'alimentation (20), qui sont en contact avec l'environnement extérieur au générateur de lumière.

En outre, de préférence, la plaque comprenant les faces (19) et (29) a des surfaces externe et interne les plus grandes possible. Avantageusement, ces surfaces interne et externe sont constituées d'ailettes formant radiateur d'échange thermique pour favoriser la dissipation vers l'extérieur de la chaleur générée à l'intérieur des modules de lampe et d'alimentation.

Sinon, on retrouve dans le générateur de lumière des figures 4, 5 et 6, les caractéristiques du générateur de lumière présenté sur les figures 1, 2 et 3, quant aux structures internes et externes des modules de lampe, d'alimentation et de transfert.

Conformément à l'invention, le générateur de lumière submersible est composé de modules étanches, la construction du générateur et de ses modules doit donc être réalisée dans des conditions permettant d'assurer l'étanchéité à indice de protection 68 à l'intérieur de chaque module, une fois que le générateur de lumière est construit.
Pour ce faire, des joints d'étanchéité de forme appropriée sont placés à la jonction des plaques formant les faces des modules, au niveau des arêtes des modules.
Ces joints d'étanchéité doivent de préférence être fabriqués dans des matériaux :
- résistants à des températures élevées,
- résistants aux milieux agressifs tels que les milieux acides, les solvants, les hydrocarbures, et
- capables de maintenir une bonne étanchéité tout en étant comprimés.
   De préférence encore, ces joints sont à base de matériaux qui sont des isolants résistant aux contraintes thermiques élevées, tout en conservant leur élasticité.

Le boîtier de chaque module peut être fabriqué à partir de plaques carrées ou rectangulaires, choisies dans un matériau adapté, précisé ci-avant en fonction de la face concernée, ces plaques étant rassemblées par l'intermédiaire des joints d'étanchéité et fixées au moyen de tirants traversant l'épaisseur des plaques.

Le boîtier de chaque module peut être réalisé à partir d'un cadre de forme sensiblement parallélépipédique formant quatre faces du boîtier de module, à savoir quatre faces en matériau bon conducteur de la chaleur, de préférence en aluminium ou en alliage d'aluminium. Un tel cadre, avec des ailettes sur certaines de ces faces, peut être obtenu par extrusion. Egalement, des cadres de section circulaire ou polygonale, éventuellement obtenus par extrusion, peuvent être utilisés pour fabriquer le boîtier de chaque module.

La fermeture d'un tel cadre, pour obtenir un module étanche, est effectuée simplement en rapportant sur les deux ouvertures opposées du cadre, des plaques de dimensions appropriées, choisies dans des matériaux appropriés, en suivant les indications détaillées de la description ci-dessus. Des joints d'étanchéité de forme appropriée doivent être placés à la jonction du cadre et de la périphérie des plaques.

Tous les joints d'étanchéité prévus entre les plaques de modules ou pour les traversées des faces des modules par des câbles ou des fenêtres pour le faisceau lumineux, doivent être suffisamment performants pour atteindre une étanchéité à indice de protection IP 68.

C'est pourquoi, il est préférable d'utiliser des joints d'étanchéité réalisés dans des matériaux évidemment étanches mais également suffisamment élastiques pour pouvoir rattraper l'expansion et le retrait de la structure du générateur, à des températures variant d'environ -70°C à environ +300°C.

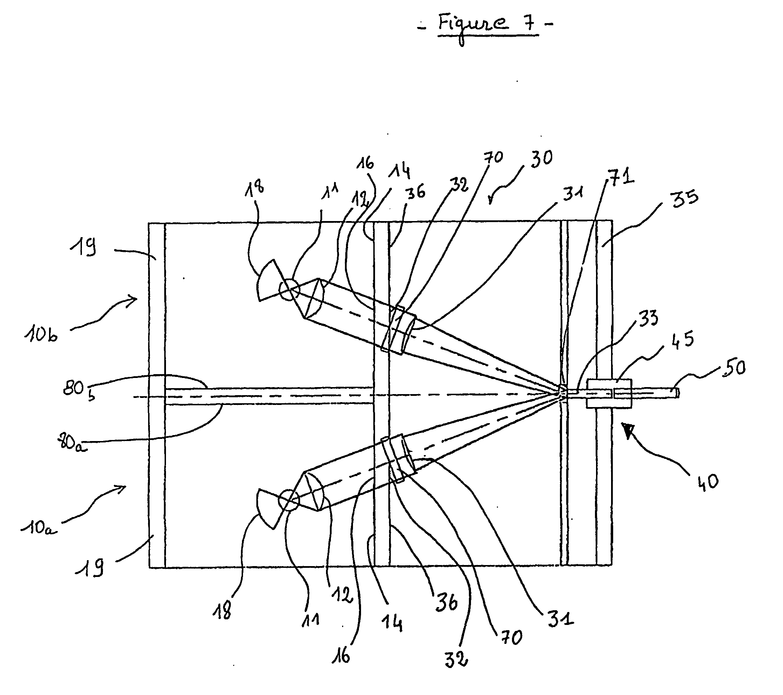

Sur la figure 7, est représenté schématiquement un cas particulier du générateur de lumière présenté sur les figures 4, 5 et 6, à savoir le cas d'un générateur de lumière comprenant deux lampes (11) à réflecteur (18), chacune de ces lampes (11) étant logée seule dans un module de lampe (10a, 10b).

La vue schématique correspond à une coupe selon l'axe BB d'un cas particulier du générateur de lumière présenté sur les figures 4, 5 et 6.

Selon ce mode de réalisation particulier, un faisceau lumineux est envoyé par chaque lampe (11), par l'intermédiaire notamment des optiques de focalisation (12, 31), des quatre fenêtres étanches (16, 32), et, si nécessaire, des filtres anticaloriques (70), vers la sortie étanche (40) de ce générateur de lumière prévu sur la face (35) du module de transfert (30).

Dans ce mode de réalisation, des filtres anticaloriques (71) sont placés devant (cas de la figure 7) ou derrière le barreau-mélangeur (33), afin d'absorber les infrarouges émis et protéger les faisceaux de fibres (50), en particulier quand elles sont en plastique.

Avantageusement, les deux faces (80a) et (80b) des modules de lampe (10a) et (10b), qui se font face, sont :
- sans contact entre elles,
- faites dans un matériau bon conducteur de la chaleur, de préférence en aluminium ou un alliage de ce métal. En outre, entre les deux faces (80a) et (80b), un espace libre est prévu dans lequel on peut faire circuler de l'eau ou de l'air selon que le générateur de lumière est placé dans un environnement humide ou non.

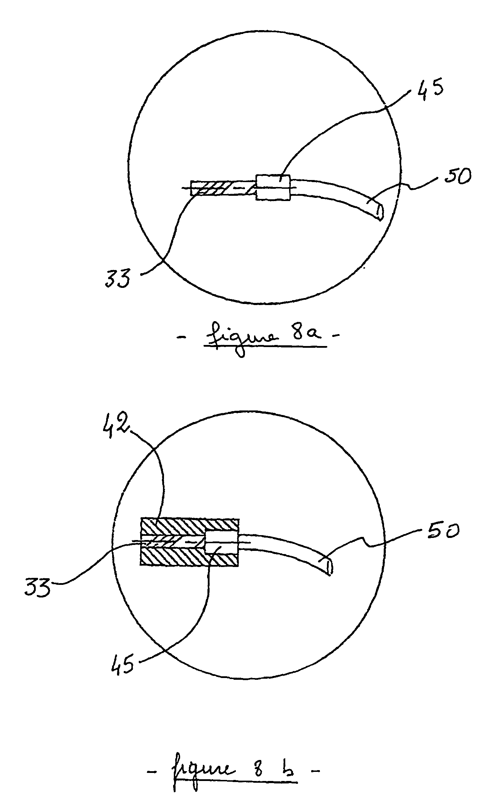

   Les figures 8a et 8b représentent, schématiquement chacune, des modes de connexion d'un faisceau étanche de fibres optiques ou d'un câble étanche optique avec le générateur de lumière selon l'invention.

Selon le mode de réalisation présenté sur la figure 8a, le câble optique étanche (50) est solidaire du connecteur étanche (45). Cet ensemble solidaire est prévu pour être connecté ou déconnecté de façon étanche, d'avec le barreau-mélangeur (33) qui est tenu dans le générateur et en appui sur l'une des faces du générateur [la face (35) sur les figures 1 et 4].

Selon le mode de réalisation présenté sur la figure 8b, le câble optique étanche (50) et le connecteur (45) sont également solidaires.

Le barreau-mélangeur (33) est entouré d'un dissipateur (42) à section circulaire présentant des ailettes, en aluminium. Le dissipateur (42) de chaleur est fixé sur une face du générateur, au niveau d'une sortie du faisceau lumineux, par exemple par soudure. La connexion du câble optique étanche (50) est effectuée en insérant le connecteur (45) dans l'évidement de dimension adaptée prévu dans le dissipateur (42), jusqu'à l'établissement d'un contact avec le barreau-mélangeur.

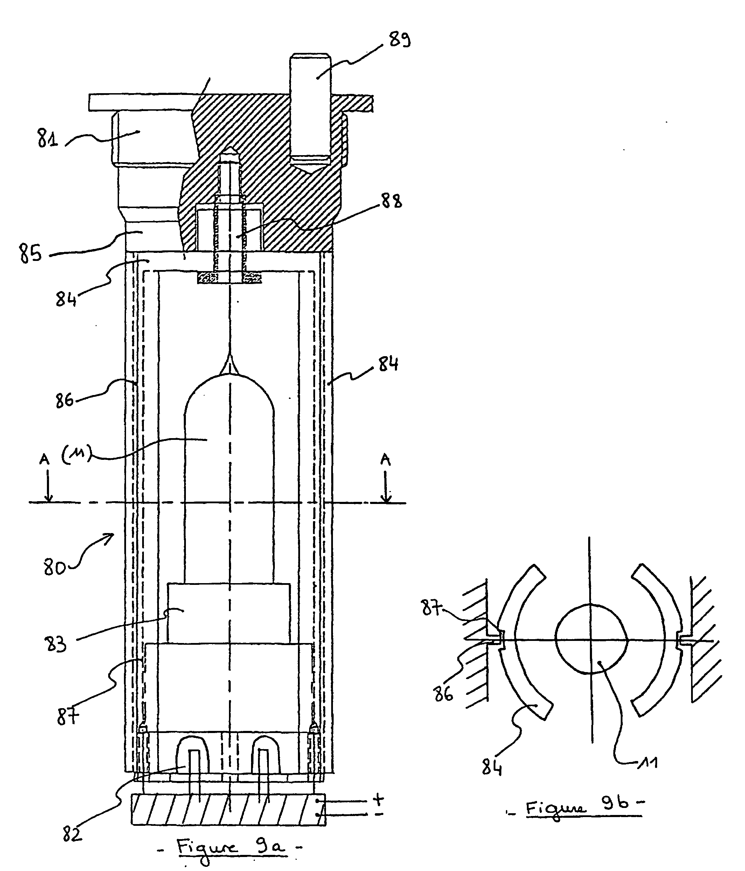

La figure 9 correspond à une variante préférée de construction du module de lampe, selon laquelle la lampe est logée dans un boîtier extractible du générateur de lumière.

Selon cette variante de réalisation de l'invention, la lampe, dans le module de lampe, est montée dans un boîtier que l'on peut faire coulisser pour le sortir du module de lampe, sans ouverture ou autre opération nécessaire sur le générateur de lumière. Pour ce faire, le boîtier comprend, outre la lampe, des moyens de connexion et de déconnexion automatiques de la lampe et de l'alimentation électrique, au moyen d'un connecteur comprenant une partie mâle et une partie femelle, ainsi qu'un joint d'étanchéité pour assurer une liaison étanche entre le boîtier et le reste du module de lampe, quand le boîtier est inséré dans le module de lampe et est en position de fonctionnement.

De préférence, le boîtier est, pour partie, de forme cylindrique, le joint est torique et le boîtier vissé à l'intérieur du module de lampe.

Selon le mode de réalisation présenté sur les figures 9a et 9b, le dispositif (80) (ou boîtier) extractible pour la fixation et le positionnement de la lampe (11) à l'intérieur du générateur comprend :
- un cylindre fileté (81) destiné à être solidarisé par vissage avec une face du module de lampe en contact avec l'environnement extérieur du générateur,
- une lampe (11) avec un système (82) de connexion électrique comprenant un système de connecteurs mâle et femelle, la partie fixe de cette connexion électrique étant reliée à une alimentation électrique (intégrée ou non dans le générateur),
- un support (83) de la lampe (11), placé à l'intérieur d'un cylindre (84) ouvert permettant au flux lumineux de se propager dans au moins deux directions. Le cylindre (84) est surmonté par un cylindre (85) dont une partie permet de réaliser le blocage et l'étanchéité avec l'enveloppe externe du générateur. Ces deux cylindres (84) et (85) sont liés par un axe permettant de convertir le mouvement de rotation du cylindre (85) en mouvement de translation pour le cylindre (84) et de désolidariser la lampe (11) de la connexion électrique (82), le support de la lampe ayant sa rotation bloquée grâce à au moins un ergot (86) coulissant dans une rainure (87) ménagée le long du support cylindrique (84) de la lampe (11). En outre, le bloquage de la rotation du support cylindrique (84) est rendu possible grâce à la fixation (88) avec jeu prévue des cylindres (84) et (85). Des plots (89) sont prévus pour faciliter l'extraction du dispositif (80) selon le sens d'extraction indiqué par la flèche.

Un joint d'étanchéité plat ou torique (non représenté) autour et en haut du cylindre fileté (81) permet d'assurer l'étanchéité IP 68, quand le dispositif (80) est fixé et correctement positionné dans le générateur de lumière.

Différents aménagements avantageux ou équivalents à ceux présentés ci-dessus peuvent être réalisés au générateur de lumière sans sortir du cadre de la présente invention. Ainsi, par exemple :
- les ailettes des surfaces interne et externe des faces des modules du générateur, en contact avec l'environnement extérieur, peuvent être creuses et servir à faire circuler un fluide froid pour évacuer la chaleur produite ;
- au niveau des fenêtres étanches et en matériau optiquement transparent se faisant face entre les modules de lampe et de transfert, on peut prévoir, par exemple :
   . une lentille de focalisation à titre de fenêtre, fixée dans l'une des faces opposées des modules de lampe et de transfert, par l'intermédiaire d'un joint d'étanchéité,
   . un filtre anticalorique, fixé dans l'une des faces opposées des modules de lampe et de transfert, par l'intermédiaire d'un joint d'étanchéité ou interposé entre les deux fenêtres,
   . un cylindre étanche optiquement transparent avec gel d'indice, pour constituer un frein thermique, améliorer la transmission optique de la lumière et éviter au maximum les pertes en intensité lumineuse. Chaque extrémité du cylindre peut jouer le rôle de fenêtre et doit alors être fixée de façon étanche dans les ouvertures prévues dans les faces opposées des modules de lampe et de transfert,
   . une boîte étanche d'optiques de forme cylindrique ou autre, chaque extrémité de la boîte jouant le rôle de fenêtres et devant être fixée de façon étanche dans les ouvertures prévues à cet effet dans les faces opposées des modules de lampe et de transfert.
- pour éviter le risque de viellissement des fibres optiques en plastique, un filtre UV (ultraviolet) peut être prévu sur le trajet du faisceau lumineux, à l'intérieur du générateur ;
- les optiques et les barreaux mélangeurs peuvent être traités antireflets, avec ou sans traitement pour la coupure des infrarouges et des ultraviolets ;
- les faces des barreaux mélangeurs et des lentilles peuvent être traitées sur les faces recevant le flux lumineux pour réduire les réflections. Ceci permet de gagner, selon les lois physiques, 4 % par face traitée. Ce procédé permet d'améliorer le rendement de 12 à 16 % suivant le type de lentille et de lampe utilisé ;
- un capteur de température peut être placé à proximité du culot de la lampe pour permettre la coupure d'alimentation de celle-ci en cas d'élévation de température supérieure au seuil de 50°C sur les embouts de câble optique ;
- les lampes peuvent être remplacées par des sources lasers pour les applications de balisage à longue distance ;
- le connecteur de fibres optiques peut être prolongé par une lentille de verre, notamment d'indice ni < 1,5, ce qui améliore l'injection du flux lumineux ;
- le barreau-mélangeur de flux peut être rapporté au connecteur du faisceau optique ;
- de préférence, les blocs modulables constitutifs du générateur sont assemblés de manière à éviter tous les ponts thermiques.

## Revendications

1. Générateur de lumière submersible présentant une étanchéité à indice de protection IP 68 pour fibres optiques en verre ou en plastique, **caractérisé en ce que** :
a) le générateur comprend plusieurs modules étanches, ces modules étant séparés et isolés thermiquement les uns des autres, mais reliés entre eux de façon étanche,
b) les modules essentiels du générateur de lumière sont :
- au moins un module étanche, dit de lampe, comprenant au moins une lampe, envoyant au moins un faisceau lumineux sur au moins une optique de focalisation, le module de lampe étant connecté de façon étanche à une alimentation en énergie électrique,
- au moins un module étanche, dit de transfert, recevant le faisceau lumineux sortant du module de lampe, l'une des faces latérales du module de transfert étant à proximité de l'une des faces latérales du module de lampe, le passage du faisceau lumineux se faisant au travers de deux fenêtres étanches, en matériau optiquement transparent, prévues en vis-à-vis, respectivement dans lesdites faces latérales des modules de lampe et de transfert, le module de transfert portant sur une autre de ses faces, un connecteur pour un ensemble de fibres optiques ;
c) entre les faces latérales des modules de lampe et de transfert se faisant face, en dehors de la zone prévue pour le passage du faisceau lumineux, qui est délimitée par les deux fenêtres étanches, sont prévus des moyens pour assurer l'étanchéité des modules de lampe et de transfert avec l'environnement extérieur qui prennent en compte la dilatation thermique et le retrait thermique des matériaux, et des moyens pour réaliser une isolation thermique entre ces modules ;
d) les autres faces des modules de lampe et de transfert sont prévues dans un matériau bon conducteur de la chaleur et, lorsqu'elles font partie de l'enveloppe externe du générateur de lumière, ces autres faces sont conformées, de sorte à avoir une surface externe d'échange thermique en contact avec l'environnement extérieur la plus grande possible, et une surface interne en contact avec l'atmosphère interne aux modules permettant un transfert thermique optimum vers la surface externe.

2. Générateur de lumière submersible selon la revendication 1, **caractérisé en ce que** les modules de lampe et de transfert sont séparés par un isolant thermique sous la forme d'une plaque en matériau poreux, minéral ou organique, dont on a colmaté la porosité, et **en ce que** l'étanchéité entre les modules de lampe et de transfert est réalisée au moyen de deux joints d'étanchéité prévus de part et d'autre de la plaque, ces deux joints étant comprimés contre la plaque lors de l'assemblage et du serrage mécanique des modules de lampe et de transfert l'un contre l'autre.

3. Générateur de lumière submersible selon la revendication 2, **caractérisé en ce que** la porosité a été colmatée par imprégnation sous vide d'une colle.

4. Générateur de lumière submersible selon la revendication 2, **caractérisé en ce que** l'épaisseur de la plaque en matériau poreux, minéral ou organique, est au moins égale à 5 mm.

5. Générateur de lumière submersible selon la revendication 4, **caractérisé en ce que** chaque joint d'étanchéité a la forme d'une feuille étanche, comprenant les ouvertures nécessaires pour le passage du faisceau lumineux et des moyens de fixation des modules entre eux et est, de préférence, à base de silicone.

6. Générateur de lumière submersible selon la revendication 1, **caractérisé en ce que** les faces des modules de lampe et de transfert qui forment l'enveloppe externe du générateur de lumière ont une surface interne et une surface externe constituées d'ailettes formant radiateur d'échange thermique.

7. Générateur de lumière submersible selon l'une quelconque des revendications précédentes, **caractérisé en ce que** le module de transfert comprend un ventilateur et/ou un dispositif d'échange thermique à effet Peltier.

8. Générateur de lumière submersible selon l'une quelconque des revendications précédentes, **caractérisé en ce qu'**un module d'alimentation en énergie électrique est intégré dans le générateur, à proximité des autres modules, et **en ce que** l'on limite les échanges thermiques entre le module d'alimentation et les autres modules du générateur.

9. Générateur de lumière submersible selon la revendication 8, **caractérisé en ce que** le module d'alimentation est à proximité du module de lampe mais sans contact avec ce dernier.

10. Générateur de lumière submersible selon la revendication 9, **caractérisé en ce que** les deux faces des modules de lampe et d'alimentation se faisant face, sont faites dans un matériau bon conducteur de la chaleur, qui est de préférence le même que celui utilisé pour fabriquer les faces externes du générateur de lumière.

11. Générateur de lumière, selon la revendication 10, **caractérisé en ce que** l'espace libre ménagé entre les deux faces des modules de lampe et d'alimentation se faisant face est mis en contact avec l'extérieur et autorise la circulation d'un fluide.

12. Générateur de lumière selon l'une quelconque des revendications précédentes, **caractérisé en ce que** la lampe, dans le module de lampe, est montée dans un boîtier que l'on peut faire coulisser pour le sortir du module de lampe, sans ouverture ou autre opération nécessaire sur le générateur de lumière, le boîtier comprenant, outre la lampe, des moyens de connexion et de déconnexion automatiques, de type mâle / femelle, de la lampe et de l'alimentation électrique, ainsi qu'un joint d'étanchéité pour assurer une liaison étanche entre le boîtier et le reste du module de lampe, quand le boîtier est inséré dans le module de lampe et est en position de fonctionnement.

13. Générateur de lumière submersible selon la revendication 1, **caractérisé en ce que** :
a) le générateur comprend quatre modules étanches, ces modules étant séparés et isolés thermiquement les uns des autres, mais reliés entre eux de façon étanche,
b) ces quatre modules sont :
- un module de lampe, comprenant une lampe sans réflecteur et deux optiques de focalisation envoyant deux faisceaux lumineux focalisés dans deux directions opposées,
- un module d'alimentation en énergie électrique, placé à proximité du module de lampe, comprenant une platine d'alimentation en énergie électrique et une liaison électrique étanche avec le module de lampe,
- deux modules de transfert, disposés de .part et d'autre des modules de lampe et d'alimentation, recevant chacun un faisceau lumineux sortant du module de lampe et comportant chacun une sortie pour le faisceau lumineux, connectée à un ensemble de fibres optiques conductrices de la lumière produite par le générateur, le passage de chaque faisceau lumineux focalisé se faisant au travers de deux fenêtres étanches, en matériau optiquement transparent, prévues en vis-à-vis dans les faces latérales des modules de transfert et de lampe,
c) entre les faces latérales des modules de lampe, d'alimentation et de transfert se faisant face, en dehors de la zone prévue pour le passage du faisceau lumineux, qui est délimitée par les deux fenêtres étanches et en matériau optiquement transparent, sont prévus successivement un joint d'étanchéité, un isolant thermique et un joint d'étanchéité, afin d'assurer l'étanchéité des modules de lampe et de transfert avec l'environnement extérieur, ainsi qu'une isolation thermique entre ces deux modules ;
d) les autres faces des modules de lampe, d'alimentation et de transfert sont prévues dans un matériau bon conducteur de la chaleur et, lorsqu'elles font partie de l'enveloppe externe du générateur de lumière, ces autres faces sont conformées, de sorte à avoir une surface externe d'échange thermique en contact avec l'environnement extérieur la plus grande possible et une surface interne en contact avec l'atmosphère interne des modules permettant un transfert thermique optimum vers la surface externe.

14. Générateur de lumière submersible selon la revendication 1, **caractérisé en ce que** :
a) le générateur comprend trois modules étanches, ces modules étant séparés et isolés thermiquement les uns des autres, mais reliés entre eux de façon étanche,
b) ces trois modules sont :
- un module de lampe comprenant une lampe à réflecteur et une optique de focalisation,
- un module d'alimentation en énergie électrique, placé à proximité du module de lampe, comprenant une platine d'alimentation en énergie électrique et une liaison électrique étanche avec le module de lampe,
- un module de transfert recevant le faisceau lumineux sortant du module de lampe et comportant une sortie connectée à un ensemble de fibres optiques conductrices de la lumière produite par le générateur, le passage du faisceau lumineux se faisant au travers de deux fenêtres étanches en matériau optiquement transparent, prévues en vis-à-vis dans les faces latérales des modules de transfert et de lampe,
c)entre les faces latérales des modules de lampe, d'alimentation et de transfert se faisant face, en dehors de la zone prévue pour le passage du faisceau lumineux, qui est délimitée par les deux fenêtres étanches et en matériau optiquement transparent, sont prévus successivement un joint d'étanchéité, un isolant thermique et un joint d'étanchéité, afin d'assurer l'étanchéité des modules de lampe et de transfert avec l'environnement extérieur, ainsi qu'une isolation thermique entre ces deux modules ;
d)les autres faces des modules de lampe, d'alimentation et de transfert sont prévues dans un matériau bon conducteur de la chaleur et, lorsqu'elles font partie de l'enveloppe externe du générateur de lumière, ces autres faces sont conformées, de sorte à avoir une surface externe d'échange thermique en contact avec l'environnement extérieur la plus grande possible et une surface interne en contact avec l'atmosphère interne des modules permettant un transfert thermique optimum vers la surface externe.

15. Générateur de lumière submersible, selon l'une quelconque des revendications précédentes, **caractérisé en ce que** la surface développée externe, en contact avec l'environnement extérieur dans chaque module, a une superficie supérieure à celle de la surface développée interne correspondante.

## Patentansprüche

1. Unterwasser-Lichtquelle mit einer Dichtheit gemäß Schutzindex IP 68 für optische Fasern aus Glas oder aus Plastik,
**dadurch gekennzeichnet**:
a) dass die Quelle mehrere dichte Module umfasst, wobei diese Module thermisch voneinander getrennt und isoliert aber auf dichte Weise miteinander verbunden sind;
b) dass die wesentlichen Module der Lichtquelle sind:
- wenigstens ein Lampenmodul genannter dichter Modul, der mindestens eine Lampe enthält, die wenigstens einen Lichtstrahl auf mindestens eine Fokussierungsoptik abstrahlt, wobei der Lampenmödul auf dichte Weise mit einer Elektroenergieversorgung verbunden ist,
- wenigstens ein Transfermodul genannter dichter Modul, der den von dem Lampenmodul abgestrahlten Lichtstrahl empfängt, wobei eine der Seitenwäde des Transfermoduls sich in der Nähe einer der Seitenwäde des Lampenmoduls befindet, der Durchgang des Lichtstrahl durch zwei dichte Fenster aus optisch transparentem Material erfolgt, die sich in den genannten Seitenwäde der Module gegenüberstehen, wobei der Transfermodul auf einer anderen seiner Seiten eine Verbindungseinrichtung für eine Gruppe optischer Fasern umfasst;
c) dass zwischen die sich gegenüberstehenden Seitenwäde des Lampen- und des Transfermoduls - außerhalb der für den Durchgang des Lichtstrahl vorgesehenen und durch die beiden dichten Fenster begrenzten Zone -, Einrichtungen vorgesehen sind, um die Dichtheit des Lampen- und des Transfermoduls gegenüber der Außenumgebung sicherzustellen, die der Wärmedehnung und dem Wärmeschwund der Materialien Rechnung tragen, und Einrichtungen, um eine Wärmeisolation zwischen diesen Modulen zu realisieren;
d) dass die anderen Seiten des Lampen- und des Transfermoduls aus einem Material sind, das ein guter Wärmeleiter ist, und dass diese anderen Seiten, wenn sie Teil der Außenhülle der Lichtquelle sind, so geformt sind, dass sie eine möglichst große mit der Außenumgebung Kontakt habende Wärmeaustausch-Außenoberfläche haben und eine Innenoberfläche, in Kontakt mit der Innenatmosphäre der Module, die eine optimale Wärmeübertragung zur Außenoberfläche ermöglicht.

2. Unterwasser-Lichtquelle nach Anspruch 1, **dadurch gekennzeichnet, dass** der Lampen- und der Transfermodul getrennt sind durch einen Wärmeisolator in Form einer Platte aus mineralischem oder organischem porösem Material, dessen Poren verstopft worden sind, und dadurch, dass die Dichtheit zwischen dem Lampen- und dem Transfermodul durch zwei Dichtungen realisiert wird, vorgesehen beiderseits der Platte, wobei diese beiden Dichtungen beim Zusammenbauen und mechanischen Zusammenspannen des Lampen- und des Transfermoduls zusammengedrückt werden.

3. Unterwasser-Lichtquelle nach Anspruch 2, **dadurch gekennzeichnet, dass** das Verstopfung der Poren durch Imprägnieren mit einem Klebstoff im Vakuum realisiert wird.

4. Unterwasser-Lichtquelle nach Anspruch 2, **dadurch gekennzeichnet, dass** die Dicke der Platte aus mineralischem oder organischem porösem Material wenigstens 5 mm beträgt.

5. Unterwasser-Lichtquelle nach Anspruch 4, **dadurch gekennzeichnet, dass** jede Dichtung die Form einer dichten Folie hat, welche die nötigen Öffnungen, um den Lichtstrahl durchzulassen und die Einrichtungen, mit denen die Module aneinander befestigt werden, enthält und die vorzugsweise aus einem Material auf Siliconbasis ist.

6. Unterwasser-Lichtquelle nach Anspruch 1, **dadurch gekennzeichnet, dass** die Seiten des Lampen- und des Transfermoduls, welche die Außenhülle der Lichtquelle bilden, eine Innenoberfläche und eine Außenoberfläche haben, auf denen Wärmeaustausch-Rippen ausgebildet sind.

7. Unterwasser-Lichtquelle nach einem der vorangehenden Ansprüche, **dadurch gekennzeichnet, dass** der Transfermodul einen Ventilator und/oder eine Peltiereffekt-Wärmeaustauschvorrichtung umfasst.

8. Unterwasser-Lichtquelle nach einem der vorangehenden Ansprüche, **dadurch gekennzeichnet, dass** ein Elektroenergie-Versorgungsmodul in die Lichtquelle integriert ist, in der Nähe der anderen Module, und dadurch, dass man die Wärmeaustausche zwischen dem Versorgungsmodul und den anderen Modulen der Quelle begrenzt.

9. Unterwasser-Lichtquelle nach Anspruch 8, **dadurch gekennzeichnet, dass** der Versorgungsmodul sich in der Nähe des Lampenmoduls befindet, aber keinen Kontakt mit diesem letzteren hat.

10. Unterwasser-Lichtquelle nach Anspruch 9, **dadurch gekennzeichnet, dass** die beiden sich gegenüberstehenden Seiten des Lampen- und des Versorgungsmoduls aus einem Material sind, das ein guter Wärmeleiter ist, und vorzugsweise aus dem gleichen Material wie dem sind, das zur Herstellung der Außenseiten der Lichtquelle verwendet wird.

11. Unterwasser-Lichtquelle nach Anspruch 10, **dadurch gekennzeichnet, dass** der zwischen den beiden sich gegenüberstehenden Seiten des Lampen- und des Versorgungsmoduls ausgesparte freie Raum mit der Außenseite Kontakt hat und die Zirkulation eines Fluids zulässt.

12. Unterwasser-Lichtquelle nach einem der vorangehenden Ansprüche, **dadurch gekennzeichnet, dass** die Lampe in dem Lampenmodul in ein Gehäuse montiert ist, das man verschieben kann, um es aus dem Lampenmodul entnehmen zu können, ohne die Lichtquelle einer Öffnung oder einer anderen Operation unterziehen zu müssen, wobei dieses Gehäuse, außer der Lampe, automatischen Verbindungseinrichtungen und Verbindungsabbaueinrichtungen des Typs Stecker/Steckbuchse zwischen Lampe und Elektroversorgung umfasst, und eine Dichtung, um eine dichte Verbindung zwischen dem Gehäuse und dem Rest des Lampenmoduls sicherzustellen, wenn das Gehäuse in den Lampenmodul eingesetzt ist und sich in Betriebsstellung befindet.

13. Unterwasser-Lichtquelle nach Anspruch 1, **dadurch gekennzeichnet**:
a) dass die Lichtquelle vier dichte Module umfasst und diese Module thermisch voneinander getrennt und isoliert aber auf dichte Weise miteinander verbunden sind,
b) dass diese vier Module sind:
- ein Lampenmodul, der eine Lampe ohne Reflektor und zwei Fokussierungsoptiken umfasst, die zwei in zwei entgegengesetzte Richtungen fokussierte Lichtstrahlen aussenden,
- ein Elektroenergie-Versorgungsmodul, in der Nähe des Lampenmoduls befindlich, eine Elektroenergie-Versorgungsplatine und eine dichte elektrische Verbindung mit dem Lampenmodul umfassend,
- zwei Transfermodule, beiderseits des Lampen- und des Versorgungsmoduls angeordnet, von denen jeder einen von dem Lampenmodul abgestrahlten Lichtstrahl empfängt und jeder einen Ausgang für den Lichtstrahl umfasst, der verbunden ist mit einer Gruppe optischer Fasem, die das von der Quelle erzeugte Licht leiten, wobei der Durchgang jedes fokussierten Lichtstrahls durch zwei dichte Fenster aus optisch transparentem Material erfolgt, die sich in den Seitenwäde der Transfermodule und des Lampenmoduls gegenüberstehen,
c) dass zwischen den sich gegenüberstehenden Seitenwäde der Lampen-, Versorgungs-, und Transfermodule - außerhalb der für den Durchgang des Lichtstrahl vorgesehenen und durch die beiden dichten, optisch transparenten Fenster begrenzten Zone -, nacheinander eine Dichtung, ein Wärmeisolator und eine Dichtung vorgesehen sind, um die Dichtheit der Lampen- und Transfermodule gegenüber der Außenumgebung sicherzustellen, und dass außerdem eine Wärmeisolation zwischen diesen beiden Modulen vorgesehen ist;
d) dass die anderen Seiten der Lampen-, Versorgungs- und Transfermodule aus einem Material sind, das ein guter Wärmeleiter ist, und dass diese anderen Seiten, wenn sie Teil der Außenhülle der Lichtquelle sind, so geformt sind, dass sie eine möglichst große mit der Außenumgebung Kontakt habende Wärmeaustausch-Außenoberfläche haben und eine Innenoberfläche in Kontakt mit der Innenatmosphäre der Module, die eine optimale Wärmeübertragung zur Außenoberfläche ermöglicht.

14. Unterwasser-Lichtquelle nach Anspruch 1, **dadurch gekennzeichnet**:
a) dass die Lichtquelle drei dichte Module umfasst und diese Module thermisch voneinander getrennt und isoliert sind, aber auf dichte Weise miteinander verbunden sind,
b) dass diese drei Module folgende sind:
- ein Lampenmodul, der eine Lampe mit Reflektor und eine Fokussierungsoptik umfasst
- ein Elektroenergie-Versorgungsmodul, in der Nähe des Lampenmoduls befindlich, eine Elektroenergie-Versorgungsplatine und eine dichte elektrische Verbindung mit dem Lampenmodul umfassend,
- ein Transfermodul, der den von dem Lampenmodul abgestrahlten Lichtstrahl empfängt und einen Ausgang für den Lichtstrahl umfasst, der verbunden ist mit einer Gruppe optischer Fasern, die das von der Quelle erzeugte Licht leiten, wobei der Durchgang des Lichtstrahls durch zwei dichte Fenster aus optisch transparentem Material erfolgt, die sich in den Seitenwäde des Transfer- und des Lampenmoduls gegenüberstehen,
c) dass zwischen den sich gegenüberstehenden Seitenwäde der Lampen-, Versorgungs-, und Transfermodule - außerhalb der für den Durchgang des Lichtstrahl vorgesehenen und durch die beiden dichten, optisch transparenten Fenster begrenzten Zone -, nacheinander eine Dichtung, ein Wärmeisolator und eine Dichtung vorgesehen sind, um die Dichtheit des Lampen- und des Transfermoduls gegenüber der Außenumgebung sicherzustellen, und dass außerdem eine Wärmeisolation zwischen diesen beiden Modulen vorgesehen ist;
d) dass die anderen Seiten des Lampen-, des Versorgungs- und des Transfermoduls aus einem Material sind, das ein guter Wärmeleiter ist, und dass diese anderen Seiten, wenn sie Teil der Außenhülle der Lichtquelle sind, so geformt sind, dass sie eine möglichst große mit der Außenumgebung Kontakt habende Wärmeaustausch-Außenoberfläche haben und eine Innenoberfläche in Kontakt mit der Innenatmosphäre der Module, die eine optimale Wärmeübertragung zur Außenoberfläche ermöglicht.

15. Unterwasser-Lichtquelle nach einem der vorangehenden Ansprüche, **dadurch gekennzeichnet, dass** bei jedem Modul die abgewickelte, mit der Außenumgebung in Kontakt befindliche Außenoberfläche eine Flächenausdehnung hat, die größer ist als diejenige der entsprechenden abgewickelten Innenoberfläche.

## Claims

1. Submersible light generator with an impermeability protection index of 68, for glass or plastic optic fibers, wherein:
a) the generator comprises several impervious modules, these modules being thermally separated and insulated from each other, but connected to each other in an impervious manner,
b) the basic modules of the light generator are:
- at least one impervious module, the lamp, comprising at least one lamp sending at least one light beam over at least one focusing optic system, the lamp module being connected in an impervious manner to an electric energy source,
- at least one impervious module, the transfer module, which receives the light beam leaving the lamp module, where one of the lateral sides of the transfer module is close to one of the lateral sides of the lamp module, the passage of the light beam taking place across two sealed windows made of an optically transparent material, positioned opposite each other, respectively in said lateral sides of the lamp and transfer modules, the transfer module having on another of its sides a connector for a set of optic fibers;
c)between the lateral sides of the lamp and transfer modules facing each other, outside the zone provided for the passage of the light beam which is delimited by the two sealed windows, means are provided to ensure the impermeability of the lamp and transfer modules with the external environment, which take into account the thermal expansion and the thermal shrinkage of materials, and means to make a thermal insulation between these modules.
d) the other sides of the lamp and transfer modules are made of a good heat conductor material and, when these sides constitute part of the external sheath of the light generator, these other sides are configured to have the largest thermal exchange external surface in contact with the external environment and an internal surface in contact with the internal atmosphere of the modules allowing optimum heat transfer towards the outer surface.

2. Submersible light generator according to claim 1 wherein the lamp and transfer modules are separated by a thermal insulating unit in the form of a plate made of a porous, mineral or organic material whose porosity has been blocked and wherein the impermeability between the lamp and transfer modules is carried out by means of two seals provided on both sides of the plates, these two seals being compressed against the plate in the course of assembly and mechanical clamping of the lamp and transfer modules on each other.

3. Submersible light generator according to claim 2 wherein the porosity has been blocked by soaking in a glue under vacuum.

4. Submersible light generator according to claim 2 wherein the thickness of the porous, mineral or organic plate is equal to at least 5 mm.

5. Submersible light generator according to claim 4 wherein each seal has the shape of an impervious sheet, comprising the necessary openings to allow the passage of the light beam and means for fixing the modules to each other and is preferably silicon based.

6. Submersible light generator according to claim 1 wherein the sides of the lamp and transfer modules which form the external sheath of the light generator have an internal surface and an external surface consisting of blades forming a thermal exchange radiator.

7. Submersible light generator according to any one of the preceding claims wherein the transfer module comprises a ventilator and/or a Peltier-effect thermal exchange device.

8. Submersible light generator according to any one of the preceding claims wherein the electrical energy source module is integrated into the generator, close to the other modules, and wherein thermal exchanges between the source module and the other generator modules is limited.

9. Submersible light generator according to claim 8 wherein the source module is placed close to the lamp module but without contact with the latter.

10. Submersible light generator according to claim 9 wherein the two sides of the transfer and source modules facing each other are made of a good heat conductor material which is preferably the same as the material used to manufacture the external sides of the light generator.

11. Submersible light generator according to claim 10 wherein a free space left between the two sides of the lamp and source modules facing each other is contacted with the exterior to allow circulation of a fluid.

12. Submersible light generator according to any one of the preceding claims wherein the lamp, in the lamp module, is mounted in a casing which can slide to remove it from the lamp module without opening or any other necessary manipulation on the light generator, the casing including, in addition to the lamp, means for automatic connection and disconnection of the lamp and of electric source by means of a connector comprising a male part and a female part, as well as a seal to ensure impervious contact between the casing and the rest of the lamp module, when the casing is inserted into the lamp module and in operating position.

13. Submersible light generator according to claim 1 wherein:
a) the generator is comprised of four impervious modules, these modules being thermally separated and insulated from each other, but connected to each other in an impervious manner,
b) the four modules are:
- one lamp module, comprising a lamp without a reflector and two focusing optics sending out two focused light beams in two opposite directions,
- one electrical energy source module positioned close to the lamp module comprising a support stage for the source of electrical energy and an impervious electrical connection to the lamp module,
- two transfer modules arranged on either side of lamp and source modules, each receiving.a light beam leaving the lamp module and each including an outlet for the light beam, connected to a set of conducting optic fibers which conduct the light generated by the generator, the passage of each focused light beam taking place across two sealed windows made of an optically transparent material, positioned opposite each other in the lateral sides of the transfer and lamp modules,
c) between the lateral sides of the lamp, the source and the transfer modules facing each other, outside the zone where passage of the light beam takes place, which is delimited by the two sealed windows made of an optically transparent material, a filled joint, a thermal insulator and another seal are successively provided to ensure the impermeability of the lamp and transfer modules with the external environment, as well as providing a thermal insulation between the two modules,
d) the other sides of the lamp, source and transfer modules are made of a good heat conductor material and, when these form part of the external sheath of the light generator, these. other sides are configured such that they have the largest thermal exchange external surface in contact with the external environment and an internal surface in contact with the internal atmosphere of the modules allowing optimum thermal transfer towards the outer surface.

14. Submersible light generator according to claim 1 wherein:
a) the generator comprises three impervious modules, these modules being thermally separated and insulated from each other, but connected to each other in an impervious manner,
b) the three modules are:
- one lamp module, comprised of a lamp with a reflector and a focusing optic,
- one electrical energy source module positioned close to the lamp module comprising a support stage for the source of electrical energy and an impervious electrical connection to the lamp module,
- one transfer module receiving the light beam leaving the lamp module and including an outlet connected to a set of conducting optic fibers which conduct the light generated by the generator, the passage of the light beam taking place across two sealed windows made of an optically transparent material, positioned opposite each other in the lateral sides of the transfer and lamp modules,
c) between the lateral sides of the lamp, source and transfer modules facing each other, outside the zone provided for the passage of the light beam, which is delimited by the two sealed windows made of an optically transparent material, a seal, a thermal insulator and another seal are successively provided to ensure the impermeability of the lamp and transfer modules with the external environment, as well as a thermal insulation between these two modules,
d) the other sides of the lamp, source and transfer modules are made of a good heat conductor material and, when these form part of the external sheath of the light generator, these other sides are configured so that the external surface of the thermal exchange in contact with the external environment is the largest possible and an internal surface in contact with the internal atmosphere of the modules allowing an optimum thermal transfer towards the outer surface.

15. Submersible light generator according, to any one of the preceding claims wherein the external area surface in contact with the external environment in each module has a surface area larger than that of the corresponding internal area surface.
